# EUROPEAN PATENT APPLICATION

(11) **EP 4 760 255 A1**
(43) Date of publication of application: **17.06.2026**
(21) Application number: 24850352.6
(22) Date of filing: 28.06.2024
(51) Int. Cl.: G01N 30/86, G01N 30/26

(54) **DEFECTIVE POINT ESTIMATION METHOD AND LIQUID CHROMATOGRAPH**

(30) Priority: 07.08.2023 JP 2023128278
(71) Applicant: HITACHI HIGH-TECH CORPORATION, Tokyo 105-6409 (JP)
(72) Inventor: KAWABE, Shunsuke, Tokyo 100-8280 (JP); HARADA, Yushi, Tokyo 105-6409 (JP); SUGIYAMA, Masuyuki, Tokyo 100-8280 (JP)
(74) Representative: MERH-IP Matias Erny Reichl Hoffmann Patentanwälte PartG mbB
(86) International application number: PCT/JP2024/023450
(87) International publication number: WO 2025/033015

(57) **Abstract**

To estimate a defective consumable from among a plurality of consumables in a plunger pump, or to estimate a defective plunger pump from among a plurality of plunger pumps. A liquid chromatograph 100 includes: a double plunger pump 6 including a first plunger pump 9a, a second plunger pump 10a, and a plurality of consumables 11a to 14a; a pressure sensor 8a configured to detect a pressure of a solvent discharged by the double plunger pump 6; a dispensing unit 2; a separation column 3; and a control unit 16 configured to estimate a defective consumable among the plurality of consumables based on a first pressure detected by the pressure sensor 8a in a first section in which the first plunger pump 9a discharges the solvent into a flow path 101 and a second pressure detected by the pressure sensor 8a in a second section in which the second plunger pump 10a discharges the solvent into the flow path 101.

## Description

### Technical Field

The present disclosure relates to a defective point estimation method and a liquid chromatograph.

### Background Art

A device used in liquid chromatography analysis is referred to as a liquid chromatograph. In general, a liquid chromatograph includes a feeding pump, a dispensing unit that introduces a sample into the liquid chromatograph, a separation column, a detector, a waste liquid container, and a system control unit that controls these parts. In general, the feeding pump used in the liquid chromatograph has a configuration in which two plunger pumps are connected in series. The feeding pump is called a double plunger pump. An upstream plunger pump (first plunger pump) sucks, compresses, and discharges a solvent. Since a constant flow rate of liquid cannot be fed only by the first plunger pump, another plunger pump (second plunger pump) is connected downstream. The second plunger pump performs an operation of canceling a pulsating flow of the first plunger pump (discharges the solvent when the first plunger pump aspirates and compresses the solvent), so that the feeding pump as a whole can feed the constant flow rate of liquid.

In order to perform more sophisticated liquid chromatography, a method called high-pressure gradient feeding is generally used. This is a method in which two sets of the double plunger pumps described above are connected in parallel, and different solvents (for example, water and an organic solvent) are fed from the respective double plunger pumps, thereby freely operating a mixing ratio of the solvents. Therefore, in order to perform the high-pressure gradient feeding, four plunger pumps are required in total.

Each of the plunger pumps is provided with a plunger seal that prevents liquid leakage from a plunger. An inlet side and an outlet side of the upstream plunger pump of the double plunger pump are respectively provided with check valves that prevent backflow. The plunger seal and the check valve are consumable parts and deteriorate due to wear and the like.

In order to confirm whether liquid chromatography analysis is correctly performed, a known internal standard substance may be mixed with a sample in advance in addition to a substance to be analyzed. This is a method generally called an internal standard method. By confirming a detection intensity and a detection time of the internal standard substance, it is confirmed that the device is functioning normally.

In a general known example, an abnormality of the liquid chromatograph is detected and a defective point is estimated by monitoring a pressure gauge provided in the feeding pump or a signal of the internal standard substance. When it is estimated that the defective point is in the feeding pump, the consumable part is replaced in many cases. PTL 1 discloses a method of detecting an abnormality of each unit using a flowmeter provided in a feeding pump or an actinometer provided in a detection unit. PTL 2 discloses a method of detecting pressure pulsation using a pressure gauge attached to a feeding pump and stopping a device.

### Citation List

### Patent Literature

PTL 1: JP2017-156093A
PTL 2: WO2020/183774

### Summary of Invention

### Technical Problem

In general, when it is estimated that a defective point is in a feeding pump, a consumable part is replaced in many cases. However, since it is not known which part of the feeding pump is defective, when a defective point of the feeding pump is suspected, all consumable parts are often replaced, and there is a problem that a part cost increases. In particular, in a case of a feeding pump having a high-pressure gradient function, since there are four plunger pumps, replacing all consumable components requires a high part cost and a long work time required for the replacement.

Therefore, an object of the present disclosure is to estimate a defective consumable from among a plurality of consumables in a plunger pump, or to estimate a defective plunger pump from among a plurality of plunger pumps.

### Solution to Problem

A defective point estimation method according to the present disclosure is a defective point estimation method for estimating a defective point of a liquid chromatograph. The method include: discharging a solvent into a flow path by a double plunger pump including a first plunger pump, a second plunger pump disposed downstream of the first plunger pump, and a plurality of consumables relating to the discharge of the solvent; introducing a sample into the flow path; detecting a pressure of the solvent discharged by the double plunger pump; separating components of the sample by a separation column; detecting the components separated by the separation column; and estimating a defective consumable among the plurality of consumables based on a first pressure detected in a first section in which the first plunger pump discharges the solvent into the flow path and a second pressure detected in a second section in which the second plunger pump discharges the solvent into the flow path.

A liquid chromatograph according to the present disclosure includes: a double plunger pump including a first plunger pump, a second plunger pump disposed downstream of the first plunger pump, and a plurality of consumables relating to discharge of a solvent; a pressure sensor configured to detect a pressure of the solvent discharged by the double plunger pump; a dispensing unit configured to introduce a sample into a flow path; a separation column connected downstream of the dispensing unit and configured to separate the sample into components; a detection unit configured to detect the components separated by the separation column; and a control unit configured to estimate a defective consumable among the plurality of consumables based on a first pressure detected by the pressure sensor in a first section in which the first plunger pump discharges the solvent into the flow path and a second pressure detected by the pressure sensor in a second section in which the second plunger pump discharges the solvent into the flow path.

A defective point estimation method according to the present disclosure is a defective point estimation method for estimating a defective point of a liquid chromatograph. The method includes: mixing a plurality of types of solvents and discharging the mixed solvents into a flow path by a plurality of plunger pumps; introducing a sample into the flow path; separating components of the sample by a separation column; detecting the components separated by the separation column; acquiring a retention time of an internal standard substance supplied to the flow path when the component of the sample is detected, and comparing the retention time with a predetermined value to determine whether the retention time is earlier or later than the predetermined value; and estimating a defective plunger pump among the plurality of plunger pumps based on a determination result of the retention time.

A liquid chromatograph according to the present disclosure includes: a plurality of plunger pumps configured to mix a plurality of types of solvents and discharge the mixed solvents into a flow path; a dispensing unit configured to introduce a sample into the flow path; a separation column connected downstream of the dispensing unit and configured to separate the sample into components; a detection unit configured to detect the components separated by the separation column; and a control unit configured to acquire a retention time of an internal standard substance supplied to the flow path when the component of the sample is detected, compare the retention time with a predetermined value to determine whether the retention time is earlier or later than the predetermined value, and estimate a defective plunger pump among the plurality of plunger pumps based on a determination result of the retention time.

### Advantageous Effects of Invention

According to the present disclosure, it is possible to estimate a defective consumable from among a plurality of consumables in a plunger pump, or to estimate a defective plunger pump from among a plurality of plunger pumps. As a result, a reduction in component cost and a reduction in recovery work time can be expected. Problems, configurations, and effects other than those described above will be clarified by the following description of embodiments.

### Brief Description of Drawings

[FIG. 1] FIG. 1 is a schematic diagram showing a configuration of a liquid chromatograph according to Embodiment 1.
[FIG. 2] FIG. 2 is a graph showing displacement of each plunger when a solvent is normally fed by a first double plunger pump.
[FIG. 3] FIG. 3 is a diagram showing a transition of sections during normal feeding performed by the first double plunger pump and a second double plunger pump.
[FIG. 4] FIG. 4 is an example of a measurement result when a sample is measured by the liquid chromatograph according to Embodiment 1.
[FIG. 5] FIG. 5 is a diagram showing a reference table held by the liquid chromatograph according to Embodiment 1.
[FIG. 6] FIG. 6 is a flowchart for estimating a defective point of a feeding pump in the liquid chromatograph according to Embodiment 1.
[FIG. 7] FIG. 7 is an example of a measurement result in an abnormal state when the sample is measured by the liquid chromatograph according to Embodiment 1.
[FIG. 8] FIG. 8 shows actual data of a pressure sensor provided in the first double plunger pump.
[FIG. 9] FIG. 9 is a schematic diagram showing a configuration of a liquid chromatograph according to Embodiment 2.
[FIG. 10] FIG. 10 is a flowchart for estimating a defective point of a feeding pump in the liquid chromatograph according to Embodiment 2.

### Description of Embodiments

An embodiment of the invention will be described in detail with reference to the drawings. In the following embodiments, it is needless to mention that components (also including element steps and the like) thereof are not necessarily essential unless otherwise specified or unless clearly considered to be essential in principle.

### (Embodiment 1)

### < Configuration Example of Feeding Pump and Liquid Chromatograph >

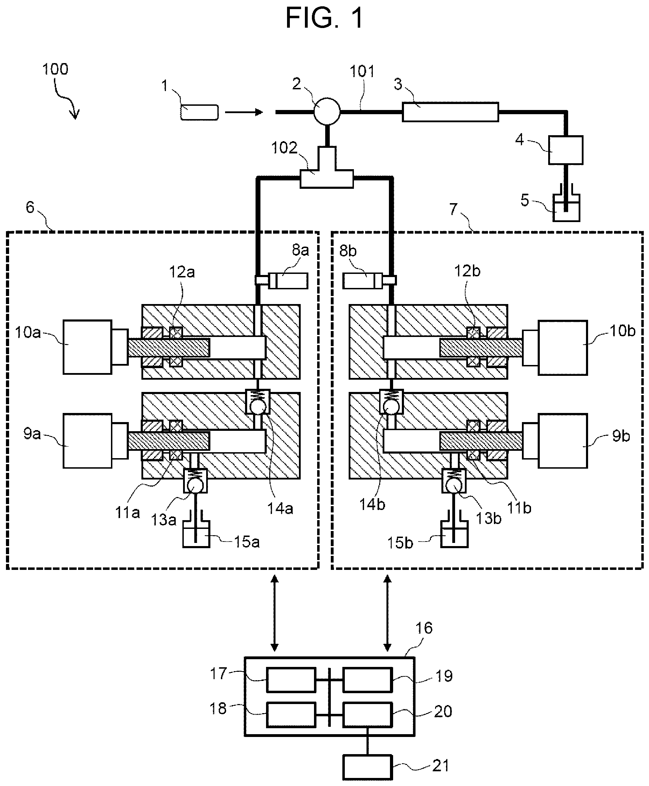

FIG. 1 is a schematic diagram showing a configuration of a liquid chromatograph according to Embodiment 1. As shown in FIG. 1, a liquid chromatograph 100 includes a first double plunger pump 6, a second double plunger pump 7, a dispensing unit 2, a separation column 3, a detection unit 4, a waste liquid container 5, and a control unit 16 that controls these parts. The dispensing unit 2 introduces a sample 1 into the liquid chromatograph 100 (flow path 101). The separation column 3 is connected downstream of the dispensing unit 2 and separates the sample 1 into components. The detection unit 4 detects each of the components separated by the separation column 3 and creates a chromatogram. The waste liquid container 5 is a container for discarding a solvent and sample for which measurement is completed. As the dispensing unit 2, the separation column 3, the detection unit 4, and the waste liquid container 5, those generally used in a liquid chromatograph can be used, and thus detailed configurations thereof will not be particularly described.

The liquid chromatograph 100 according to Embodiment 1 performs liquid chromatography by a feeding method called high-pressure gradient feeding. Therefore, in the liquid chromatograph 100, a plurality of types of solvents are mixed and discharged into the flow path by a plurality of plunger pumps (the first double plunger pump 6 and the second double plunger pump 7) connected in parallel. For example, the first double plunger pump 6 discharges water contained in a solvent bottle 15a, and the second double plunger pump 7 discharges an organic solvent (for example, methanol) contained in a solvent bottle 15b.

### <First Double Plunger Pump 6>

The first double plunger pump 6 includes a pressure sensor 8a, a first plunger pump 9a, a second plunger pump 10a, and a plurality of consumables related to discharge of the solvent. The first plunger pump 9a and the second plunger pump 10a are connected in series. The first plunger pump 9a is disposed upstream, and the second plunger pump 10a is disposed downstream.

The pressure sensor 8a is provided downstream of the second plunger pump 10a. The pressure sensor 8a measures a pressure (discharge pressure) of the solvent (liquid) discharged from the second plunger pump 10a and outputs a pressure value to the control unit 16.

The control unit 16 controls operations of the first plunger pump 9a and the second plunger pump 10a by giving command values to the first plunger pump 9a and the second plunger pump 10a based on the discharge pressure measured by the pressure sensor 8a and a predetermined operation sequence.

The first plunger pump 9a includes a first check valve 13a, a second check valve 14a, and a first seal 11a. The first check valve 13a is disposed on a flow path of a suction port of the first plunger pump 9a, and the second check valve 14a is disposed on a flow path of a discharge port of the first plunger pump 9a. The first check valve 13a and the second check valve 14a restrict flow of the solvent. The first seal 11a prevents liquid leakage from the first plunger pump 9a.

The second plunger pump 10a includes a second seal 12a. The second seal 12a prevents liquid leakage from the second plunger pump 10a.

The solvent (for example, water) contained in the solvent bottle 15a is pushed out by the first plunger pump 9a and the second plunger pump 10a and supplied to the dispensing unit 2 and the separation column 3 disposed downstream.

### <Second Double Plunger Pump 7>

The second double plunger pump 7 has a configuration the same as that of the first double plunger pump 6, and includes a pressure sensor 8b, a first plunger pump 9b, a second plunger pump 10b, a first seal 11b, a second seal 12b, a first check valve 13b, and a second check valve 14b. The solvent (for example, methanol) contained in the solvent bottle 15b is pushed out by the first plunger pump 9b and the second plunger pump 10b and supplied to the dispensing unit 2 and the separation column 3 disposed downstream. The detailed description of the second double plunger pump 7 is the same as that of the first double plunger pump 6, and thus is omitted.

The solvent discharged from the first double plunger pump 6 and the solvent discharged from the second double plunger pump 7 are merged at a merging portion 102 and mixed at a desired concentration ratio. Accordingly, in the liquid chromatograph 100 according to Embodiment 1, the components of the sample 1 can be separated and eluted while continuously changing the concentration ratio of an eluent (water, methanol).

In the present specification, a "lower limit point" indicates a lowest position of downstroke in a range in which the plunger pumps (9a, 9b, 10a, 10b) can move in a pressurizing chamber. Meanwhile, an "upper limit point" indicates a highest position of upstroke in a range in which the plunger pumps (9a, 9b, 10a, 10b) can move in the pressurizing chamber. The "upstroke" of the plunger pumps (9a, 9b, 10a, 10b) indicates a movement in a direction in which the solvent in the pressurizing chamber is compressed or discharged, and the "downstroke" of the plunger indicates a movement in a direction in which the solvent is aspirated into the pressurizing chamber.

The solvent contained in the solvent bottle 15a is pushed out by the first plunger pump 9a and the second plunger pump 10a of the first double plunger pump 6 and supplied to the dispensing unit 2. The solvent contained in the solvent bottle 15b is pushed out by the first plunger pump 9b and the second plunger pump 10b of the second double plunger pump 7 and supplied to the dispensing unit 2. The sample 1 to be analyzed is injected into the solvent supplied to the dispensing unit 2. The solvent into which the sample 1 has been injected is introduced into the separation column 3 and separated for each component. Thereafter, the detection unit 4 detects absorbance, fluorescence intensity, refractive index, and the like corresponding to the component of the sample. The separation column 3 is a reverse phase column. The separation column 3 may be a normal phase column. The separation column 3 is filled with fine particles, and a load pressure of several tens of megapascals to more than a hundred megapascals is generated in the double plunger pump (6, 7) due to a fluid resistance when the solvent flows through gaps between the fine particles. A magnitude of the load pressure varies depending on a diameter of the separation column 3 and a passing flow rate.

### <Control Unit 16>

The control unit 16 includes a processor 17, a main storage unit 18, an auxiliary storage unit 19, and an interface 20. The processor 17 is a central processing unit (CPU), a graphics processing unit (GPU), a digital signal processor (DSP), an ASIC, or the like. The main storage unit 18 is a dynamic random access memory (DRAM) or the like, and is used as a work area of the processor 17. The auxiliary storage unit 19 is a hard disk drive (HDD), a solid state drive (SSD), or a combination thereof, and stores various programs and various types of data. The interface 20 is a device controller that controls operations of the first double plunger pump 6, the second double plunger pump 7, and the like connected to the control unit 16, a monitor interface that outputs a video signal to a display unit 21, and a network controller that performs communication control.

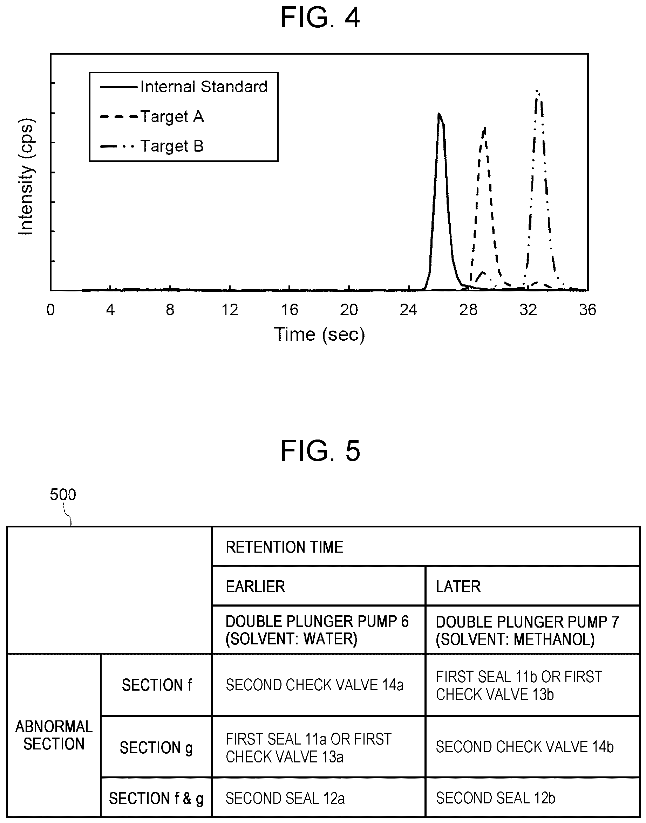

For example, the auxiliary storage unit 19 stores a program for estimating a defective double plunger pump from among a plurality of double plunger pumps (6, 7) and estimating a defective consumable from among a plurality of consumables in the estimated defective double plunger pump. The auxiliary storage unit 19 stores a reference table 500 (see FIG. 5) that is referred to when the program is executed. The reference table 500 may be stored in the auxiliary storage unit 19 inside the control unit 16 or may be stored in a storage unit outside the control unit 16.

### <Feeding Method>

An outline of a feeding method when a solvent is normally fed using the first double plunger pump 6 in Embodiment 1 will be described. Here, the "normal feeding" is a feeding method in which the solvent discharged from the first double plunger pump 6 flows through the dispensing unit 2, the separation column 3, and the detection unit 4 to analyze the sample 1. Since the first double plunger pump 6 and the second double plunger pump 7 shown in FIG. 1 have the same device configuration, the description of the feeding method performed by the second double plunger pump 7 will be omitted. The second double plunger pump 7 performs the same operation with a delay of a half cycle with respect to the first double plunger pump 6.

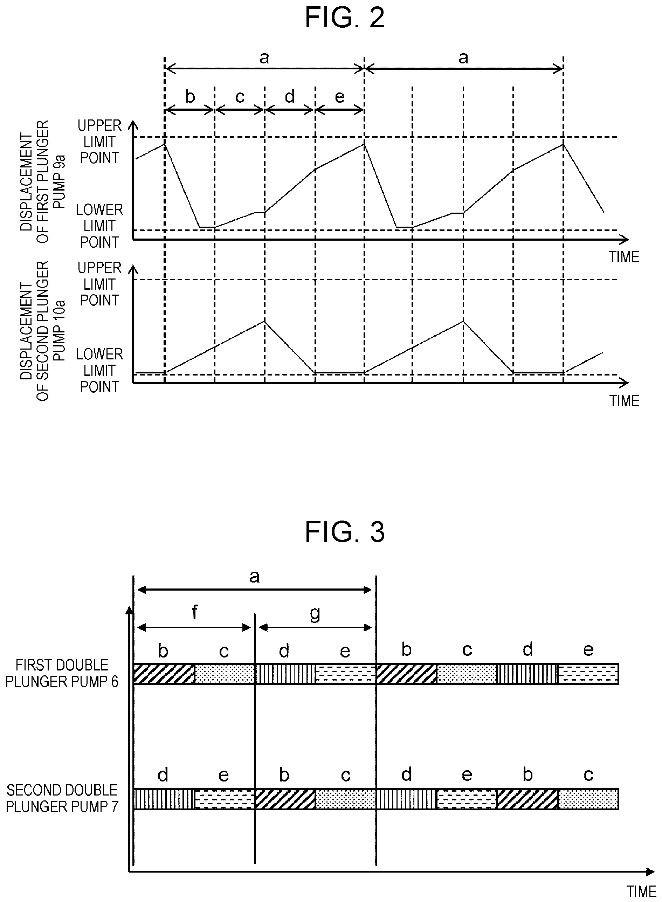

FIG. 2 is a graph showing displacement of each plunger when the solvent is normally fed by the first double plunger pump 6. In two graphs shown in FIG. 2, horizontal axes represent a time, and vertical axes respectively represent, from the top, the displacement of the first plunger pump 9a and the displacement of the second plunger pump 10a. Regarding the displacement of the first plunger pump 9a and the displacement of the second plunger pump 10a, an upstroke direction is a positive direction, and a downstroke direction is a negative direction. In the normal feeding, both the first plunger pump 9a and the second plunger pump 10a operate with reference to the lower limit point.

In the normal feeding, both the first plunger pump 9a and the second plunger pump 10a periodically operate. In FIG. 2, two cycles are shown. A drive cycle a includes four sections b, c, d, and e, and the sections are repeated in this order. A length of the drive cycle a is, for example, 2 seconds, 4 seconds, or 6 seconds. Each section will be described.

The section b is referred to as a single feeding section in which the second plunger pump 10a operates. In this section, the second plunger pump 10a discharges at a feeding amount designated by a device user. The first plunger pump 9a moves to the lower limit point and then stops until the section b ends. Although the first plunger pump 9a is displaced in the negative direction, the movement of the first plunger pump 9a does not affect a discharge flow rate since the second check valve 14a closes the flow path.

The section c is referred to as a compression section. In this section, the second plunger pump 10a discharges at the feeding amount designated by the device user. The control unit 16 retrieves a stored compression rate parameter and calculates a compression amount (plunger displacement amount) of the solvent necessary for compression of the first plunger pump 9a using the compression rate parameter together with a pressure value received from the pressure sensor 8a. Thereafter, under control of the control unit 16, the first plunger pump 9a moves in the positive direction by the calculated compression amount. Since the second check valve 14a is closed until a pressure in the pressurizing chamber of the first plunger pump 9a exceeds a discharge pressure, the movement of the first plunger pump 9a does not affect the discharge flow rate.

The section d is referred to as a cross feeding section. In this section, the second plunger pump 10a moves to the lower limit point. The first plunger pump 9a moves in the positive direction and discharges at a flow rate value obtained by summing a flow rate generated by performing suction generated by the second plunger pump 10a moving in the negative direction and a flow rate designated by the device user. Accordingly, the first double plunger pump 6 as a whole discharges at the feeding amount designated by the device user.

The section e is referred to as a single feeding section in which the first plunger pump 9a operates. In this section, the first plunger pump 9a discharges by the feeding amount designated by the device user. The second plunger pump 10a stops until the section e ends.

After the end of the single feeding section e in which the first plunger pump 9a operates, the period transitions to the section b, and the same periodic operation is repeated.

In the section b to the section e, attention is paid to a point that the second plunger pump 10a performs main feeding in the section b and the section c, and the first plunger pump 9a performs main feeding in the section d and the section e. It is also important that the check valves that are opened and closed are different in each section.

For example, when the first seal 11a of the first plunger pump 9a is defective, liquid leakage occurs from the first plunger pump 9a, and thus feeding performed by the first plunger pump 9a cannot be performed. Therefore, in the section d and the section e, the feeding amount of the double plunger pump decreases, and a feeding pressure decreases. Thereafter, when the period transitions to the section b, since the second check valve 14a closes the flow path and the second plunger pump 10a is in charge of the feeding, the feeding amount of the double plunger pump 6 recovers to the flow rate designated by the device user, and the feeding pressure also recovers to a normal value.

Similarly, for example, when the first check valve 13a of the first plunger pump 9a is defective, backflow from the first plunger pump 9a to an upstream side occurs, and thus the feeding performed by the first plunger pump 9a cannot be performed. Therefore, in the section d and the section e, the feeding amount of the double plunger pump 6 decreases, and the feeding pressure decreases. Thereafter, when the period transitions to the section b, since the second check valve 14a closes the flow path and the second plunger pump 10a is in charge of the feeding, the feeding amount of the double plunger pump 6 recovers to the flow rate designated by the device user, and the feeding pressure also recovers to the normal value.

For example, when the second check valve 14a of the first plunger pump 9a is defective, backflow from the downstream second plunger pump 10a to the upstream first plunger pump 9a occurs, and thus the feeding performed by the second plunger pump 10a cannot be performed. Therefore, in the section b and the section c, the feeding amount of the double plunger pump 6 decreases, and the feeding pressure decreases. Thereafter, when the period transitions to the section d, the plunger pump that performs the feeding transitions from the second plunger pump 10a to the first plunger pump 9a. When the first plunger pump 9a performs the feeding, since the second check valve 14a is in an open state historically, even when the second check valve 14a is defective and loses a valve function, it is possible to perform the same feeding as usual. Therefore, the feeding amount of the double plunger pump 6 recovers to the flow rate designated by the device user, and the feeding pressure also recovers to the normal value.

For example, when the second seal 12a of the second plunger pump 10a is defective, the feeding flow rate and the feeding pressure decrease in all of the section b to section e. This is because the liquid leakage occurs at a timing when either of the first plunger pump 9a and the second plunger pump 10a performs the feeding since the solvent also passes through an inside of a cylinder of the second plunger pump 10a when the first plunger pump 9a performs the feeding.

As described above, it is possible to specify a component having a high possibility of being defective by confirming in which section of the section b to section e the pressure value decreases.

FIG. 3 is a diagram showing the transition of sections during the normal feeding performed by the first double plunger pump 6 and the second double plunger pump 7. The two double plunger pumps 6 and 7 operate with the drive cycle a shifted by a half cycle. That is, when the first double plunger pump 6 is in the section b and the section c, the second double plunger pump 7 is in the section d and the section e. Here, a period in which the first double plunger pump 6 is in the section b and the section c and the second double plunger pump 7 is in the section d and the section e is referred to as a section f (first section). Conversely, a period in which the first double plunger pump 6 is in the section d and the section e and the second double plunger pump 7 is in the section b and the section c is referred to as a section g (second section).

### < Internal Standard Method >

FIG. 4 is an example of a measurement result when a sample is measured by the liquid chromatograph according to Embodiment 1. A horizontal axis represents a time elapsed since start of measurement, and a vertical axis represents a detection value obtained by the detection unit 4. FIG. 4 shows three peaks derived from an internal standard substance (internal standard), a target substance A, and a target substance B from left. The device user uses the liquid chromatograph 100 for the purpose of measuring the target substances A and B.

The device user mixes a known internal standard substance with a sample to be measured at a known concentration, and measures the sample. Then, as shown in FIG. 4, a detection peak derived from the internal standard substance appears. For the detection peak derived from the internal standard substance, a retention time and a peak height of the peak are stored in advance in the control unit 16, and it is confirmed whether the liquid chromatograph 100 is operating normally by comparing with the values. For example, in FIG. 4, the retention time of the internal standard substance is about 26 seconds, and it is confirmed whether this value falls within a predetermined time range stored in the control unit 16, for example, within a range of 25 seconds to 27 seconds to ensure normality of the device. If the value does not fall within the predetermined time range, the device user is notified of device abnormality.

The retention time of the internal standard substance varies depending on a composition of the separation column 3 and a solvent ratio of high-pressure gradient feeding in which the double plunger pumps 6 and 7 perform the feeding, and the prescribed time range is determined by a preliminary experiment.

For example, there is a case in which water is fed from the first double plunger pump 6 and methanol is fed from the second double plunger pump 7 by using a reverse phase column as the separation column 3. The internal standard substance and a feeding ratio of water and methanol vary depending on a target substance to be measured. These are determined by the device user through a preliminary study and experiment.

In general, the reverse phase column is characterized in that the retention time becomes shorter as a ratio of an organic solvent such as methanol increases, and the retention time becomes longer as a ratio of water increases. For example, in a case in which the retention time is 26 seconds when the internal standard substance is measured at a mixing ratio of water 50% and methanol 50%, the retention time decreases to 20 seconds when the mixing ratio is water 40% and methanol 60%. As described above, the retention time of the internal standard substance varies depending on the characteristic of the separation column 3 and the ratio of the fed solvent.

In a similar example, for example, when a retention time of the internal standard substance which is about 26 seconds historically decreases to about 20 seconds, it is expected that the feeding amount of the double plunger pump feeding water decreases and a feeding ratio of methanol relatively increases. In contrast, when the retention time of the internal standard substance is delayed to about 30 seconds, it is expected that the feeding amount of the double plunger pump feeding methanol decreases and a feeding ratio of water relatively increases.

As described above, by focusing on the retention time of the internal standard substance, it is possible to specify the double plunger pump whose feeding amount decreases.

### < Reference Table >

FIG. 5 is a diagram showing a reference table held by the liquid chromatograph according to Embodiment 1. Here, the reference table 500 stored in the auxiliary storage unit 19 of the control unit 16 will be described. The reference table 500 includes information on a section in which a pressure abnormality occurs, information on whether the retention time of the internal standard substance is earlier or later than a prescribed time range, and information on a defective consumable. The control unit 16 estimates a defective consumable by referring to the reference table 500.

The reference table 500 is a data table assuming a configuration in which the separation column 3 is the reverse phase column, the double plunger pump 6 discharges water, and the double plunger pump 7 discharges methanol. According to the reference table 500, when the retention time of the internal standard substance is earlier than the prescribed time range, it is determined that the double plunger pump 6 is defective. When the retention time of the internal standard substance is later than the prescribed time range, it is determined that the double plunger pump 7 is defective.

According to the reference table 500, when the retention time of the internal standard substance is earlier than the prescribed time range and a section in which the pressure abnormality occurs is only the section f, it is determined that the second check valve 14a of the double plunger pump 6 is defective. When the retention time of the internal standard substance is earlier than the prescribed time range and the section in which the pressure abnormality occurs is only the section g, it is determined that the first seal 11a or the first check valve 13a of the double plunger pump 6 is defective. When the retention time of the internal standard substance is earlier than the prescribed time range and the sections in which the pressure abnormality occurs are the section f and the section g, it is determined that the second seal 12a of the double plunger pump 6 is defective.

According to the reference table 500, when the retention time of the internal standard substance is later than the prescribed time range and the section in which the pressure abnormality occurs is only the section f, it is determined that the first seal 11b or the first check valve 13b of the double plunger pump 7 is defective. When the retention time of the internal standard substance is later than the prescribed time range and the section in which the pressure abnormality occurs is only the section g, it is determined that the second check valve 14b of the double plunger pump 7 is defective. When the retention time of the internal standard substance is later than the prescribed time range and the sections in which the pressure abnormality occurs are the section f and the section g, it is determined that the second seal 12b of the double plunger pump 7 is defective.

### <Defective Point Estimation >

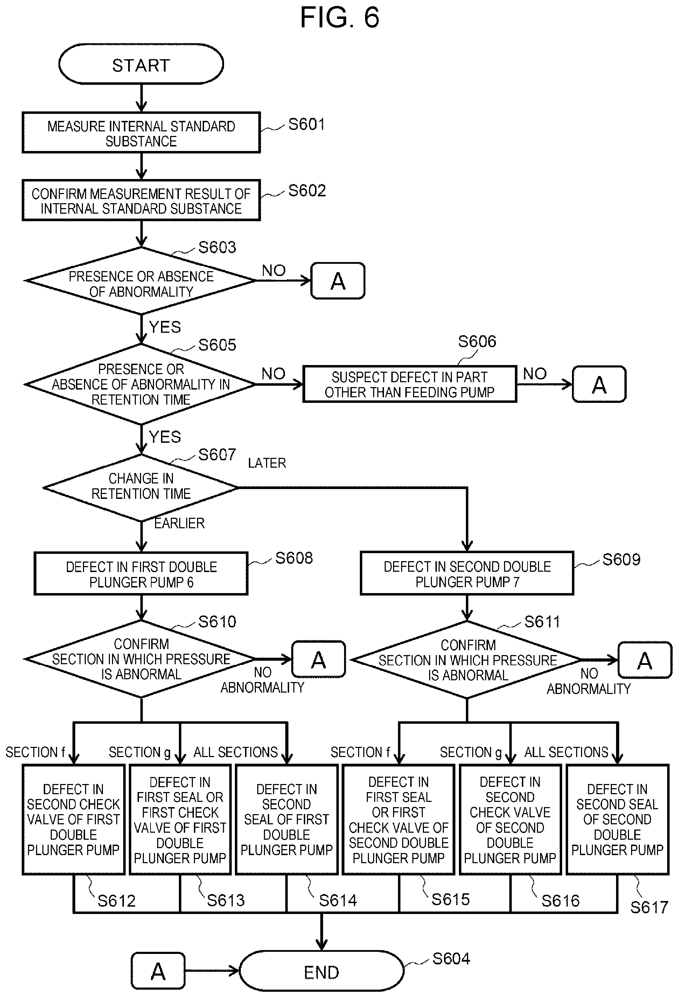

FIG. 6 is a flowchart for estimating a defective point of a feeding pump (the first double plunger pump 6 and the second double plunger pump 7 are collectively referred to as the feeding pump) in the liquid chromatograph according to Embodiment 1. For example, each step of the flowchart in FIG. 6 is executed by executing, by the processor 17 of the control unit 16, a program for estimating a defective consumable.

Here, it is assumed that a reverse phase column is used as the separation column 3, water is fed from the first double plunger pump 6, and methanol is fed from the second double plunger pump 7.

### < Example of Defective Point Estimation >

An example in which the sample 1 is actually measured by the configuration of the liquid chromatograph shown in FIG. 1 and an abnormality occurs will be described.

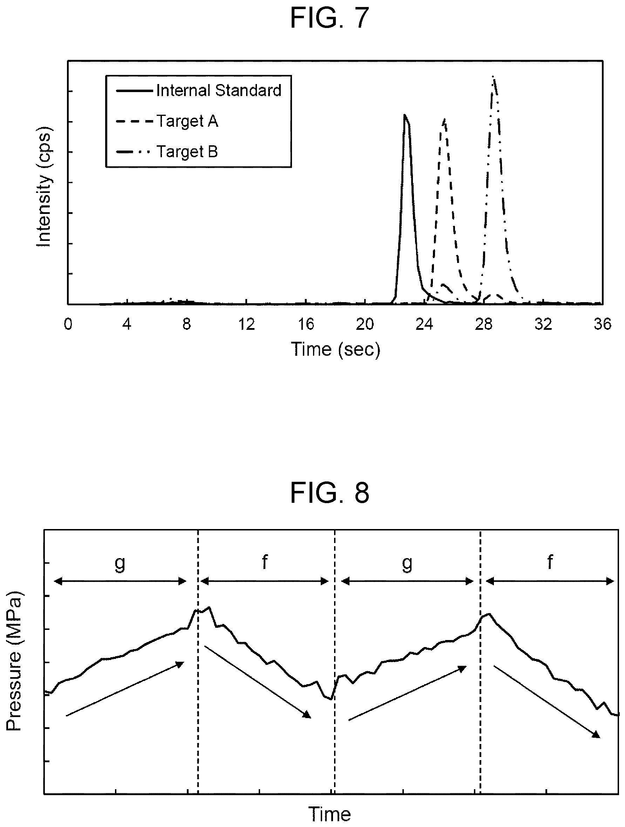

FIG. 7 is an example of a measurement result in an abnormal state when the sample is measured by the liquid chromatograph according to Embodiment 1. A horizontal axis represents a time elapsed since start of measurement, and a vertical axis represents a detection value obtained by the detection unit 4. The sample that is the same as that shown in FIG. 4 is measured.

According to the flowchart shown in FIG. 6, first, the control unit 16 measures the internal standard substance (step S601). Specifically, the first double plunger pump 6 and the second double plunger pump 7 discharge the solvent into the flow path 101 and introduce the sample 1 and the internal standard substance into the flow path 101. The pressure sensors 8a and 8b detect pressures of the solvents discharged by the first double plunger pump 6 and the second double plunger pump 7. The separation column 3 separates the sample 1 into the components, and the detection unit 4 detects the components separated by the separation column 3. At this time, each component of the sample 1 and a component of the internal standard substance are measured.

When the measurement of the internal standard substance is completed, the control unit 16 confirms a measurement result of the internal standard substance (step S602). The confirmation of the measurement result of the internal standard substance is confirmation of whether the retention time, the peak height, a peak area, a half-value width, or a combination thereof falls within a prescribed range stored in the control unit 16. The retention time, the peak height, the peak area, the half-value width, or the combination thereof of the internal standard substance is referred to as a feature of the internal standard substance.

If there is no abnormality in the feature of the internal standard substance (step S603: NO), the control unit 16 ends this flowchart (step S604). In contrast, if there is an abnormality in the feature of the internal standard substance (step S603: YES), the control unit 16 determines presence or absence of an abnormality in the retention time (step S605).

In the measurement result shown in FIG. 7, the peak time of the internal standard substance is about 23 seconds, which is earlier than the peak time (about 26 seconds) of the internal standard substance in a normal state in FIG. 4. In the present embodiment, for example, a normal range of the retention time is 25 seconds or more and 27 seconds or less. In this case, the control unit 16 determines that the measurement result (peak time (about 23 seconds)) of the internal standard substance is abnormal (step S605: YES), and executes processing of step S607.

In contrast, if determining that the measurement result of the internal standard substance is not abnormal (step S605: NO), the control unit 16 determines that a defect in part other than the feeding pump is suspected (step S606), and ends this flowchart (step S604).

The control unit 16 confirms a change in the retention time that is not in the normal range (step S607). In the example of FIG. 7, since the retention time is earlier than a predetermined value (step S607: earlier), the control unit 16 determines that the first double plunger pump 6 is defective by referring to the reference table 500 (step S608). In contrast, if the retention time is later than the predetermined value (step S607: later), the control unit 16 determines that the second double plunger pump 7 is defective by referring to the reference table 500 (step S609). When the reverse phase column is used as the separation column 3 and the retention time decreases, it is considered that the feeding amount of water decreases and the feeding ratio of methanol increases. Therefore, a defect in the first double plunger pump 6 feeding water is most suspected. When the retention time is delayed, it is considered that the feeding amount of methanol decreases and the feeding ratio of water increases. Therefore, a defect in the second double plunger pump 7 feeding methanol is most suspected.

After determining that the first double plunger pump 6 is defective (step S608), the control unit 16 confirms a value of the pressure sensor 8a provided in the first double plunger pump 6, and confirms a section of a pressure abnormality (step S610). FIG. 8 shows actual data of the pressure sensor 8a provided in the first double plunger pump 6. A horizontal axis represents a time, and a vertical axis represents a pressure value.

According to FIG. 8, it can be confirmed that a pressure (second pressure) decreases in the section f and a pressure (first pressure) increases in the section g. This indicates that the feeding amount of the second plunger pump 10a decreases and the feeding amount of the first plunger pump 9a is normal as described above. In the example of FIG. 8, the control unit 16 confirms that the pressure decreases in the section f, and thus concludes that a defect in the second check valve 14a of the first double plunger pump 6 is suspected (step S612).

When it can be confirmed that the pressure (second pressure) increases in the section f and the pressure (first pressure) decreases in the section g, it can be determined that the feeding amount of the first plunger pump 9a decreases and the feeding amount of the second plunger pump 10a is normal. Therefore, the control unit 16 confirms that the pressure decreases in the section g, and thus concludes that a defect in the first seal 11a or the first check valve 13a of the first double plunger pump 6 is suspected (step S613).

When it is confirmed that the pressure decreases in all of the sections, it can be determined that the feeding amount of the first double plunger pump 6 as a whole decreases. Therefore, the control unit 16 confirms that the pressure decreases in all of the sections, and thus concludes that a defect in the second seal 12a of the first double plunger pump 6 is suspected (step S614).

In contrast, after determining that the second double plunger pump 7 is defective (step S609), the control unit 16 confirms a value of the pressure sensor 8b provided in the second double plunger pump 7, and confirms a section of a pressure abnormality (step S611).

When it can be confirmed that the pressure decreases in the section f and the pressure increases in the section g, it can be determined that the feeding amount of the first plunger pump 9b decreases and the feeding amount of the second plunger pump 10b is normal. Therefore, the control unit 16 confirms that the pressure decreases in the section f, and thus concludes that a defect in the first seal 11b or the first check valve 13b of the second double plunger pump 7 is suspected (step S615).

When it can be confirmed that the pressure increases in the section f and the pressure decreases in the section g, it can be determined that the feeding amount of the second plunger pump 10b decreases and the feeding amount of the first plunger pump 9b is normal. Therefore, the control unit 16 confirms that the pressure decreases in the section g, and thus concludes that a defect in the second check valve 14a of the second double plunger pump 7 is suspected (step S616).

When it is confirmed that the pressure decreases in all of the sections, it can be determined that the feeding amount of the second double plunger pump 7 as a whole decreases. Therefore, the control unit 16 confirms that the pressure decreases in all of the sections, and thus concludes that a defect in the second seal 12b of the second double plunger pump 7 is suspected (step S617).

If the section of the pressure abnormality cannot be confirmed in step S610 and step S611, it is determined that there is no defective point, and this flowchart is ended (step S604).

In Embodiment 1 described above, it is possible to determine whether the first double plunger pump 6 is defective or the second double plunger pump 7 is defective based on the change in the retention time of the internal standard substance.

In Embodiment 1 described above, it is possible to specify the defective point of the consumables (the first seal 11a, the second seal 12a, the first check valve 13a, the second check valve 14a, the first seal 11b, the second seal 12b, the first check valve 13b, and the second check valve 14b) based on the section in which the pressure abnormality occurs.

### <Method for Estimating Defective Consumable from among Plurality of Consumables in Plunger Pump>

As described above, the method (defective point estimation method) for estimating the defective consumable from among the plurality of consumables in the plunger pump in the liquid chromatograph according to Embodiment 1 includes:
discharging the solvent into the flow path 101 by the first double plunger pump 6 and the second double plunger pump 7;
introducing the sample 1 into the flow path 101 via the dispensing unit 2 (step S601);
detecting the pressure of the solvent discharged by the first double plunger pump 6 and the second double plunger pump 7 (step S601);
separating the sample 1 into the components by the separation column 3 (step S601);
detecting, by the detection unit 4, the components separated by the separation column 3 (step S601); and
estimating the defective consumable among the plurality of consumables based on the first pressure detected in the first section (section g) in which the first plunger pump 9a (or 9b) discharges the solvent to the flow path and the second pressure detected in the second section (section f) in which the second plunger pump 10a (or 10b) discharges the solvent to the flow path (step S610 to step S617).

The defective point estimation method further includes:
acquiring the retention time of the internal standard substance supplied to the flow path 101 when the component of the sample 1 is detected, and determining whether the retention time is earlier or later than the predetermined value (step S607); and
estimating the defective double plunger pump among the plurality of double plunger pumps (the first double plunger pump 6 and the second double plunger pump 7) based on the determination result of the retention time, a type of the separation column 3 (the reverse phase column or the normal phase column), and a type of the solvent (water or methanol) (step S607 to step S609).

The estimation of the defective consumable described above includes:
estimating that the second check valve is defective when the first pressure is not abnormal and the second pressure is abnormal (step S612 and step S616);
estimating that the first seal or the first check valve is defective when the first pressure is abnormal and the second pressure is not abnormal (step S613 and step S615); and
estimating that the second seal is defective when the first pressure and the second pressure are abnormal (step S614 and step S617).

### < Method for Estimating Defective Plunger Pump from among Plurality of Plunger Pumps >

As described above, the method (defective point estimation method) for estimating the defective plunger pump from among the plurality of plunger pumps in the liquid chromatograph according to Embodiment 1 includes:
mixing a plurality of types of solvents and discharging the mixed solvent to the flow path 101 by the plurality of double plunger pumps (6, 7) (step S601);
introducing the sample 1 into the flow path 101 via the dispensing unit 2 (step S601);
separating the sample 1 into the components by the separation column 3 (step S601);
detecting, by the detection unit 4, the components separated by the separation column 3 (step S601);
acquiring the retention time of the internal standard substance supplied to the flow path 101 when the component of the sample 1 is detected, and determining whether the retention time is earlier or later than the predetermined value (step S607); and
estimating the defective plunger pump among the plurality of double plunger pumps (6, 7) based on the determination result of the retention time.

The estimation of the defective plunger pump described above includes:
estimating the defective plunger pump among the plurality of double plunger pumps (6, 7) based on the determination result of the retention time, the type of the separation column 3 (reverse phase column or normal phase column), and the type of the solvent (water or methanol).

When the type of the separation column to be used is determined, information on the type of the separation column 3 described above is not necessary. In addition, when the type of the solvent to be used is determined, information on the type of the solvent described above is not necessary.

### (Embodiment 2)

In Embodiment 1, the liquid chromatograph having the high-pressure gradient delivery function as shown in FIG. 1 has been described as an example. However, the present invention is also applicable to a liquid chromatograph that does not have the high-pressure gradient delivery function.

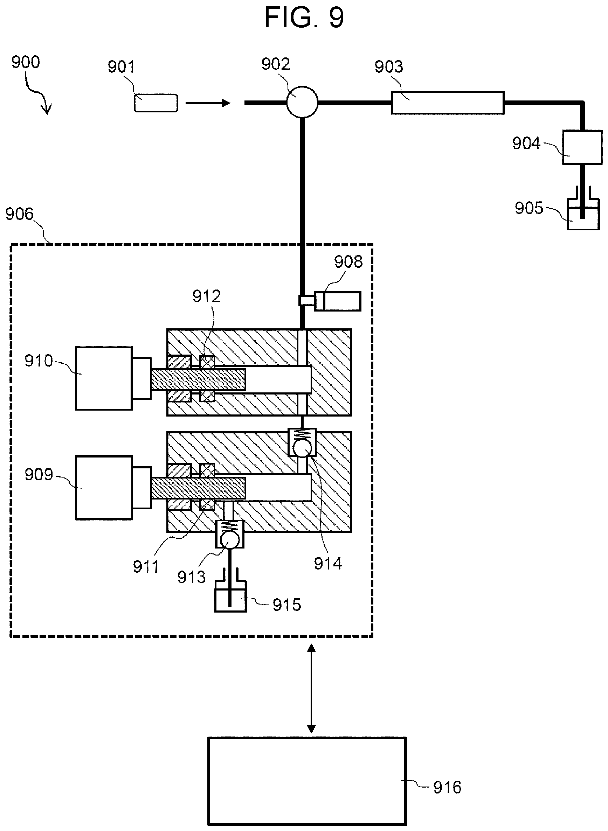

For example, a liquid chromatograph 900 including one double plunger pump 906 as shown in FIG. 9 will be described. In this configuration, there is only one double plunger pump 906, and the solvent to be fed is only a solvent prepared in advance. The liquid chromatograph 900 according to Embodiment 2 includes a dispensing unit 902 that introduces a sample 901 into the liquid chromatograph 900, a separation column 903, a detection unit 904, a waste liquid container 905, the double plunger pump 906, and a control unit 916.

The double plunger pump 906 includes a pressure sensor 908, a first plunger pump 909, a second plunger pump 910, a first seal 911, a second seal 912, a first check valve 913, a second check valve 914, and a solvent bottle 915. The details of each part of the double plunger pump 906 are the same as those in Embodiment 1, and thus the description thereof will be omitted.

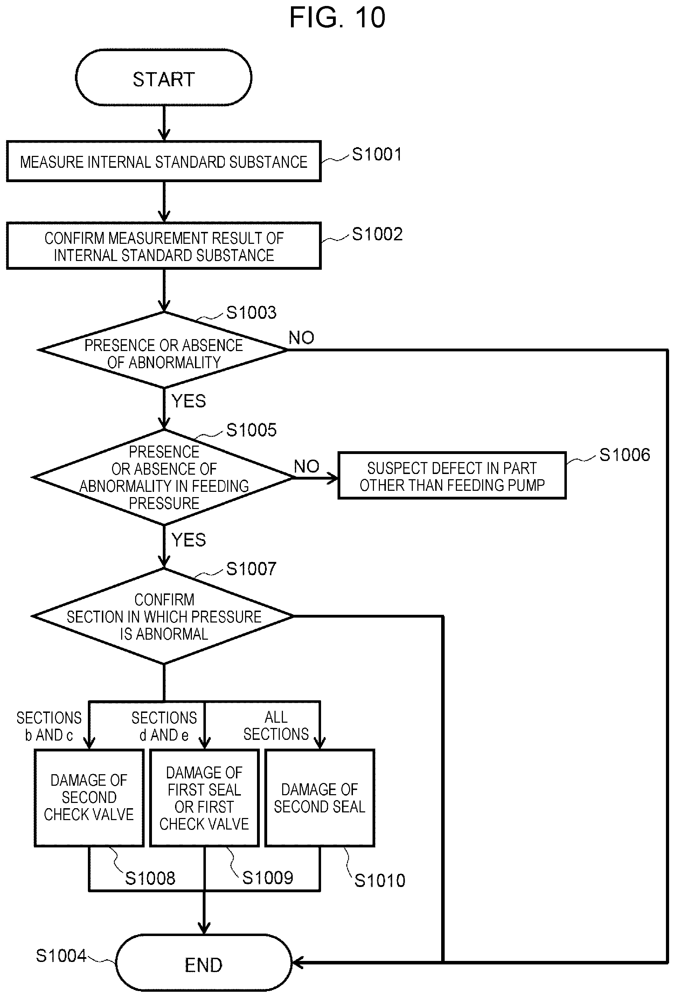

FIG. 10 is a flowchart for estimating a defective point of a feeding pump in the liquid chromatograph according to Embodiment 2. Since processing from step S1001 to step S1004 in FIG. 10 is the same as the processing from step S601 to step S604 in FIG. 6 in Embodiment 1, the description thereof will be omitted.

In Embodiment 2, the control unit 916 confirms an abnormality in a feeding pressure (step S1005). If the feeding pressure pulsates or is lower than a historical pressure (step S1005: YES), it is determined that there is a pressure abnormality, and processing of step S1007 is executed.

In contrast, if determining that a measurement result of an internal standard substance is not abnormal (step S1005: NO), the control unit 916 determines that a defect in part other than the feeding pump is suspected (step S1006), and ends this flowchart (step S1004).

The control unit 16 confirms a value of the pressure sensor 908 provided in the double plunger pump 906 and confirms a section of a pressure abnormality (step S1007).

When it can be confirmed that the pressure decreases in the section b and the section c and the pressure increases in the section d and the section e, it can be determined that a feeding amount of the second plunger pump 910 decreases and a feeding amount of the first plunger pump 909 is normal. Therefore, the control unit 16 confirms that the pressure decreases in the section b and the section c, and thus concludes that a defect in the second check valve 914 is suspected (step S1008).

When it can be confirmed that the pressure increases in the section b and the section c and the pressure decreases in the section d and the section e, it can be determined that the feeding amount of the first plunger pump 909 decreases and the feeding amount of the second plunger pump 910 is normal. Therefore, the control unit 16 confirms that the pressure decreases in the section d and the section e, and thus concludes that a defect in the first seal 911 or the first check valve 913 is suspected (step S1009).

When it is confirmed that the pressure decreases in all of the sections, it can be determined that the feeding amount of the double plunger pump 906 as a whole decreases. Therefore, the control unit 16 confirms that the pressure decreases in all of the sections, and thus concludes that a defect in the second seal 912 of the double plunger pump 906 is suspected (step S1010).

### (Modifications)

The invention is not limited to the embodiments described above, and includes various modifications. The embodiments described above have been described in detail to facilitate understanding of the invention, and the invention is not necessarily limited to those including all the configurations described above. A part of a configuration in one embodiment can be replaced with a configuration in another embodiment, and a configuration in one embodiment can also be added to a configuration in another embodiment. A part of a configuration in each embodiment may also be added to, deleted from, or replaced with another configuration.

In Embodiment 1, the retention time is used as the feature of the measurement result of the internal standard substance to perform the abnormality determination of the plurality of double plunger pumps (6, 7). In Embodiment 1, the value used for determination can be changed in accordance with a content of measurement to be performed. Specifically, instead of the retention time of the internal standard substance, the half-value width, the peak height, peak symmetry, or the like of the internal standard substance may be used to perform the abnormality determination of the double plunger pump (6, 7). A prescribed range to be compared with the feature (half-value width, peak height, peak symmetry, etc.) of the internal standard substance described above is actually determined according to a purpose of the device user.

Even when there is no measurement purpose, it is also possible to use a standard substance intended only to test normality of the liquid chromatograph. For example, it is also possible to measure, for the purpose of device inspection, a known standard substance whose data in a normal state is acquired in advance, and specify normality of the device and a defective point in an abnormal state based on the measurement result.

A type and a range of the pressure abnormality may be prescribed in the control unit. For example, a state in which a periodic (in a predetermined period) pressure fluctuation occurs more than or equal to a predetermined pressure fluctuation value (for example, 5 megapascals) may be the pressure abnormality (pressure pulsation abnormality), or a state in which an average of pressure values in a predetermined period (for example, several seconds) is less than or equal to a predetermined pressure average value (for example, 10 megapascals) may be the pressure abnormality (pressure minimum value abnormality).

The predetermined fluctuation value described above is a pressure fluctuation value at which analysis of a measurement target substance becomes difficult. The analysis of the measurement target substance includes calculation of a retention time, a half-value width, a peak height, a peak area, or peak symmetry in a chromatogram acquired based on a detection result obtained by a detection unit.

The pressure fluctuation value at which the analysis of the measurement target substance becomes difficult is a pressure fluctuation value at which a retention time, a half-value width, a peak height, a peak area, or peak symmetry of an internal standard substance measured together with the measurement target substance exceeds a statistical distribution range of the liquid chromatograph in a normal state. The statistical distribution range in the normal state is a range that is calculated based on an average value and a standard deviation of each of the retention time, the half-value width, the peak height, the peak area, and the peak symmetry of the internal standard substance and that is acquired when the liquid chromatograph operates normally. For example, for the measurement result of the internal standard substance, it is possible to acquire statistical data of each of the retention time, the half-value width, the peak height, and the peak symmetry in the normal state of the device in advance, and acquire the average value and the standard deviation of the statistical data, thereby prescribing the statistical distribution range in the normal state. For example, it is also possible to define, as device abnormality, a case in which a deviation from each average value is larger than three times the standard deviation.

In addition, for the measurement result of the internal standard substance, it is also possible to prescribe a normal range based on the statistical data in the normal state of the device, and define, as the pressure abnormality, a case in which a pressure fluctuation occurs to the extent of deviating from the normal range. For example, in a case in which a periodic pressure fluctuation deviates from the normal range of the internal standard substance when the periodic pressure fluctuation of 5 megapascals or more occurs, the definition of the pressure abnormality can be specified as when the periodic pressure fluctuation becomes 5 megapascals or more.

The present invention also includes a case in which a device is immediately stopped and a defective point is notified to a device user when the defective point is specified. For example, a liquid chromatograph has a display monitor (display unit 21) for a device user, and the display monitor can display an estimated defective point and notify the device user of the defective point.

### Reference Signs List

1: sample
2: dispensing unit
3: separation column
4: detection unit
5: waste liquid container
6: first double plunger pump
7: second double plunger pump
8a, 8b: pressure sensor
9a, 9b: first plunger pump
10a, 10b: second plunger pump
11a, 11b: first seal
12a, 12b: second seal
13a, 13b: first check valve
14a, 14b: second check valve
15a, 15b: solvent bottle
16: control unit
17: processor
18: main storage unit
19: auxiliary storage unit
20: interface
100: liquid chromatograph
900: liquid chromatograph
901: sample
902: dispensing unit
903: separation column
904: detection unit
905: waste liquid container
906: double plunger pump
908: pressure sensor
909: first plunger pump
910: second plunger pump
911: first seal
912: second seal
913: first check valve
914: second check valve
915: solvent bottle
916: control unit

## Claims

1. A defective point estimation method for estimating a defective point of a liquid chromatograph, the method comprising:
discharging a solvent into a flow path by a double plunger pump including a first plunger pump, a second plunger pump disposed downstream of the first plunger pump, and a plurality of consumables relating to the discharge of the solvent;
introducing a sample into the flow path;
detecting a pressure of the solvent discharged by the double plunger pump;
separating components of the sample by a separation column;
detecting the components separated by the separation column; and
estimating a defective consumable among the plurality of consumables based on a first pressure detected in a first section in which the first plunger pump discharges the solvent into the flow path and a second pressure detected in a second section in which the second plunger pump discharges the solvent into the flow path.

2. The defective point estimation method according to claim 1, further comprising:
discharging a solvent different from the solvent into the flow path by one or a plurality of double plunger pumps different from the double plunger pump;
acquiring a retention time of an internal standard substance supplied to the flow path when the component of the sample is detected, and comparing the retention time with a predetermined value to determine whether the retention time is earlier or later than the predetermined value; and
estimating a defective double plunger pump among the plurality of double plunger pumps based on a determination result of the retention time, a type of the separation column, and a type of the solvent.

3. The defective point estimation method according to claim 1, wherein
the plurality of consumables include a first seal of the first plunger pump, a first check valve disposed upstream of the first plunger pump, a second check valve disposed downstream of the first plunger pump, and a second seal of the second plunger pump, and
estimating the defective consumable includes:
estimating that the second check valve is defective when the first pressure is not abnormal and the second pressure is abnormal,
estimating that the first seal or the first check valve is defective when the first pressure is abnormal and the second pressure is not abnormal, and
estimating that the second seal is defective when the first pressure and the second pressure are abnormal.

4. The defective point estimation method according to claim 3, wherein
the pressure abnormality is a state in which a fluctuation of pressure values in a predetermined period exceeds a predetermined pressure fluctuation value or a state in which an average of the pressure values in the predetermined period is equal to or less than a predetermined pressure average value.

5. The defective point estimation method according to claim 4, wherein
the predetermined pressure fluctuation value is a pressure fluctuation value at which analysis of a measurement target substance becomes difficult.

6. The defective point estimation method according to claim 5, wherein
the analysis of the measurement target substance includes calculation of a retention time, a half-value width, a peak height, a peak area, or peak symmetry in a chromatogram acquired based on a detection result of each component.

7. The defective point estimation method according to claim 5, wherein
the pressure fluctuation value at which the analysis of the measurement target substance becomes difficult is a pressure fluctuation value at which a retention time, a half-value width, a peak height, a peak area, or peak symmetry of an internal standard substance measured together with the measurement target substance exceeds a statistical distribution range of the liquid chromatograph in a normal state.

8. The defective point estimation method according to claim 7, wherein
the statistical distribution range of the liquid chromatograph in the normal state is a range that is calculated based on an average value and a standard deviation of each of the retention time, the half-value width, the peak height, the peak area, and the peak symmetry of the internal standard substance and that is acquired when the liquid chromatograph operates normally.

9. A liquid chromatograph, comprising:
a double plunger pump including a first plunger pump, a second plunger pump disposed downstream of the first plunger pump, and a plurality of consumables relating to discharge of a solvent;
a pressure sensor configured to detect a pressure of the solvent discharged by the double plunger pump;
a dispensing unit configured to introduce a sample into a flow path;
a separation column connected downstream of the dispensing unit and configured to separate the sample into components;
a detection unit configured to detect the components separated by the separation column; and
a control unit configured to estimate a defective consumable among the plurality of consumables based on a first pressure detected by the pressure sensor in a first section in which the first plunger pump discharges the solvent into the flow path and a second pressure detected by the pressure sensor in a second section in which the second plunger pump discharges the solvent into the flow path.

10. The liquid chromatograph according to claim 9, further comprising:
one or a plurality of double plunger pumps different from the double plunger pump and configured to discharge a solvent different from the solvent into the flow path, wherein
the control unit acquires a retention time of an internal standard substance supplied to the flow path when the component of the sample is detected, compares the retention time with a predetermined value to determine whether the retention time is earlier or later than the predetermined value, and estimates a defective double plunger pump among the plurality of double plunger pumps based on a determination result of the retention time, a type of the separation column, and a type of the solvent.

11. The liquid chromatograph according to claim 9, further comprising:
a storage unit configured to store a reference table including information on a section in which a pressure abnormality occurs and information on a defective consumable, wherein
the control unit estimates the defective consumable among the plurality of consumables based on the first pressure, the second pressure, and the reference table.

12. The liquid chromatograph according to claim 9, wherein
the plurality of consumables include a first seal of the first plunger pump, a first check valve disposed upstream of the first plunger pump, a second check valve disposed downstream of the first plunger pump, and a second seal of the second plunger pump, and
the control unit
estimates that the second check valve is defective when the first pressure is not abnormal and the second pressure is abnormal,
estimates that the first seal or the first check valve is defective when the first pressure is abnormal and the second pressure is not abnormal, and
estimates that the second seal is defective when the first pressure and the second pressure are abnormal.

13. The liquid chromatograph according to claim 12, wherein
the pressure abnormality is a state in which a fluctuation of pressure values in a predetermined period exceeds a predetermined pressure fluctuation value or a state in which an average of the pressure values in the predetermined period is equal to or less than a predetermined pressure average value.

14. The liquid chromatograph according to claim 9, further comprising:
a display unit configured to display information on the estimated defective consumable.

15. A defective point estimation method for estimating a defective point of a liquid chromatograph, the method comprising:
mixing a plurality of types of solvents and discharging the mixed solvents into a flow path by a plurality of plunger pumps;
introducing a sample into the flow path;
separating components of the sample by a separation column;
detecting the components separated by the separation column;
acquiring a retention time of an internal standard substance supplied to the flow path when the component of the sample is detected, and comparing the retention time with a predetermined value to determine whether the retention time is earlier or later than the predetermined value; and
estimating a defective plunger pump among the plurality of plunger pumps based on a determination result of the retention time.

16. The defective point estimation method according to claim 15, wherein
estimating the defective plunger pump includes estimating the defective plunger pump among the plurality of plunger pumps based on the determination result of the retention time, a type of the separation column, and the type of the solvent.

17. A liquid chromatograph, comprising:
a plurality of plunger pumps configured to mix a plurality of types of solvents and discharge the mixed solvents into a flow path;
a dispensing unit configured to introduce a sample into the flow path;
a separation column connected downstream of the dispensing unit and configured to separate the sample into components;
a detection unit configured to detect the components separated by the separation column; and
a control unit configured to acquire a retention time of an internal standard substance supplied to the flow path when the component of the sample is detected, compare the retention time with a predetermined value to determine whether the retention time is earlier or later than the predetermined value, and estimate a defective plunger pump among the plurality of plunger pumps based on a determination result of the retention time.

18. The liquid chromatograph according to claim 17, wherein
the control unit estimates the defective plunger pump among the plurality of plunger pumps based on the determination result of the retention time, a type of the separation column, and the type of the solvent.

19. The liquid chromatograph according to claim 17, further comprising:
a storage unit configured to store a reference table including information on whether the retention time of the internal standard substance is earlier or later than a prescribed time range and information on the defective plunger pump, wherein
the control unit estimates the defective plunger pump among the plurality of plunger pumps based on the determination result of the retention time and the reference table.
